# EUROPÄISCHE PATENTSCHRIFT

(11) **EP 2 654 147 B1**
(45) Veröffentlichungstag und Bekanntmachung des Hinweises auf die Patenterteilung: **23.09.2015**
(21) Anmeldenummer: 13164102.9
(22) Anmeldetag: 17.04.2013
(51) Int. Cl.: H02B 1/21, H01R 25/14, H02B 1/052

(54) **Sammelschienenadapter**
Busbar adapter
Adaptateur de barre collectrice

(30) Priorität: 20.04.2012 DE 102012206597
(43) Veröffentlichungstag der Anmeldung: 23.10.2013
(73) Patentinhaber: Wöhner GmbH & Co. KG Elektrotechnische Systeme, 96472 Rödental (DE)
(72) Erfinder: Büttner, Alex, 96472 Rödental (DE); Curth, Christopher, 96465 Neustadt (DE)
(74) Vertreter: Isarpatent

(56) Entgegenhaltungen:
- EP-A1- 2 026 429
- WO-A2-2006/027355
- DE-A1-102006 022 374
- DE-B3-102007 061 430

## Beschreibung

Die Erfindung betrifft einen Sammelschienenadapter gemäß dem Oberbegriff des Patentanspruchs 1.

Ein Sammelschienenadapter ist beispielsweise aus der DE 100 61 942 C1 bekannt. Der Sammelschienenadapter weist dabei ein Gehäuse aus Kunststoff auf, an dessen unterer Seite Klemmfüße ausgebildet sind. Das Gehäuse weist des Weiteren einen Boden auf, von welchem die etwa L-förmigen Klemmfüße nach unten abstehen. Der Sammelschienenadapter enthält im Bereich jedes Klemmfußes eine Öffnung und ist zur Verwendbarkeit für Stromschienen in unterschiedlicher Breite und Stärke sowie hinsichtlich eines einfachen Zusammenbaus dahingehend ausgebildet, dass in die Öffnung ein etwa U-förmiger Fuß eingesetzt ist. Die Basis des U-förmigen Fußes ist senkrecht in dem Gehäuse angeordnet, wobei zwischen den beiden Schenkeln des Fußes eine Kontakteinrichtung eingesetzt ist, die aus einer etwa U-förmigen Metallfeder und einem in etwa U-förmigen Kupferkontakt besteht.

Im Allgemeinen werden Sammelschienenadapter eingesetzt, um eine Kontaktierung zwischen Stromschienen und elektrischen Geräten herzustellen. Solche Sammelschienenadapter bestehen aus einem Gehäuse mit nach unten abstehenden Klemmfüßen, die zum Festklemmen des Sammelschienenadapters gegenüber den zugehörigen Stromschienen dienen. Hierbei befinden sich im Bereich der Klemmfüße Kontakte, die nach dem Aufschieben des Sammelschienenadapters mit der jeweiligen Stromschiene kontaktieren, wodurch der Stromweg innerhalb des Sammelschienenadapters zu Ausgangsklemmen hergestellt wird.

Des Weiteren ist in der DE 10 2006 022 374 A1 ein Schaltgerät, insbesondere ein Sicherungslasttrennschalter, beschrieben. Das Schaltgerät weist ein Gehäuse mit einem daran angeordneten Deckel auf, bei dem im Gehäuse mindestens ein Paar von Kontakten zur Aufnahme jeweils eines Kontaktmessers einer Sicherungseinheit und dergleichen vorgesehen ist. Jeder Kontakt ist elektrisch mit einem Zugangs- oder Abgangskontaktelement verbunden. Ein Kontakt jedes Kontaktpaares weist als Zugangskontakt einen Fußabschnitt auf, der an der Gehäuseunterseite aus dem Gehäuse vorsteht. Ein an der unteren Seite des Schaltgeräts angeordneten Adapter weist zwei Kontaktöffnungen je Fußabschnitt zur alternative Kontaktierung auf. Der Adapter ist zum Aufstecken auf Stromschienen vorgesehen.

Eine Aufgabe der Erfindung besteht darin, einen Sammelschienenadapter der eingangs genannten Art so auszubilden, dass er eine verbesserte Anordnung von einem Installationsgerät erlaubt.

Diese Aufgabe wird erfindungsgemäß durch die im Patentanspruch 1 angegebenen Merkmale gelöst.

Dies hat die Vorteile, dass das Installationsgerät auch um 180° versetzt auf dem Sammelschienenadapter angeordnet werden kann und dass das Installationsgerät auch um 180° versetzt in der Befestigungseinrichtung aufgenommen werden kann und in dieser befestigt werden kann. Weiterhin wird durch die Schräge das Einführen und Positionieren des Installationsgeräts in der Befestigungseinrichtung zusätzlich vereinfacht und der Rasteinrichtung ermöglicht dabei eine besonders einfache Befestigung des Installationsgeräts durch Verrasten mit der Rasteinrichtung.

Weitere Ausgestaltungen des erfindungsgemäßen Sammelschienenadapters ergeben sich aus den Unteransprüchen.

Die Rasteinrichtung ist dabei beispielsweise ein Haltesteg. Eine Rasteinrichtung ermöglicht dabei eine besonders einfache Befestigung des Installationsgeräts durch Verrasten mit der Rasteinrichtung. Beispielsweise kann das Installationsgerät von beiden Seiten an dem Haltesteg einrasten oder hinterrasten.

Gemäß einer anderen bevorzugten Ausführungsform verläuft der Haltestege quer durch die Öffnung der Befestigungseinrichtung, vorzugsweise quer durch die Mitte der Öffnung. Der Haltesteg ist beispielsweise an wenigstens einer Seite zusätzlich mit einer nach unten gerichteten Schräge ausgebildet. Dies vereinfacht das Positionieren und Einrasten des Installationsgeräts in der Befestigungseinrichtung zusätzlich.

In einer weiteren bevorzugten Ausführungsform ist die Installationseinrichtung von wenigstens einer Seite an dem Haltesteg einrastbar. Dadurch ergibt sich eine besonders einfache und kostengünstige Befestigung des Installationsgeräts an dem Sammelschienenadapter, ohne dass dieses beispielsweise an diesem festgeschraubt werden muss.

Gemäß einer anderen bevorzugten Ausführungsform weist die Kontaktaufnahme wenigstens eine Aufnahme zum Aufnehmen eines Steckkontakts des Installationsgeräts auf. Der Kontakt des Sammelschienenadapters zum Kontaktieren des Steckkontakts ist beispielsweise eine Kontaktfeder. Statt eines Steckkontakts und einer Kontaktfeder kann auch jede andere Kontaktierung zwischen dem Sammelschienenadapter und dem Installationsgerät vorgesehen werden, die geeignet ist, das Installationsgerät mit einer in dem Sammelschienenadapter aufgenommenen Stromschiene elektrisch zu kontaktieren.

In einer weiteren bevorzugten Ausführungsform weist der Sammelschienenadapter wenigstens eine Führungseinrichtung auf zum Vorpositionieren des Installationsgeräts an dem Sammelschienenadapter. Die Führungseinrichtung ist beispielsweise als ein Führungsschlitz in dem Sammelschienenadapter ausgebildet.

Gemäß einer bevorzugten Ausführungsform ist die Führungseinrichtung derart ausgebildet einen Teil des Installationsgeräts aufzunehmen und zu führen bevor das Kontaktelement, z.B. Steckkontakt, des Installationsgeräts in der Kontaktaufnahme teilweise oder ganz aufgenommen ist. Dadurch kann ein Vorpositionieren des Installationsgeräts auf dem Sammelschienenadapter vor dem eigentlichen Kontaktieren mit dem Kontakt des Sammelschienenadapters erreicht werden.

Nachfolgend wird der erfindungsgemäße Sammelschienenadapter anhand der Zeichnung zur Erläuterung weiterer Merkmale beschrieben. Es zeigen:
- Fig. 1: eine Perspektivansicht eines Sammelschienenadapters gemäß einer Ausführungsform der Erfindung,
- Fig. 2: eine Draufsicht auf den Sammelschienenadapter gemäß Fig. 1,
- Fig. 3: eine Schnittansicht A-A des Sammelschienenadapters gemäß Fig. 2, und
- Fig. 4: ein Ausschnitt eines Haltestegs des Sammelschienenadapters in einer Schnittansicht.

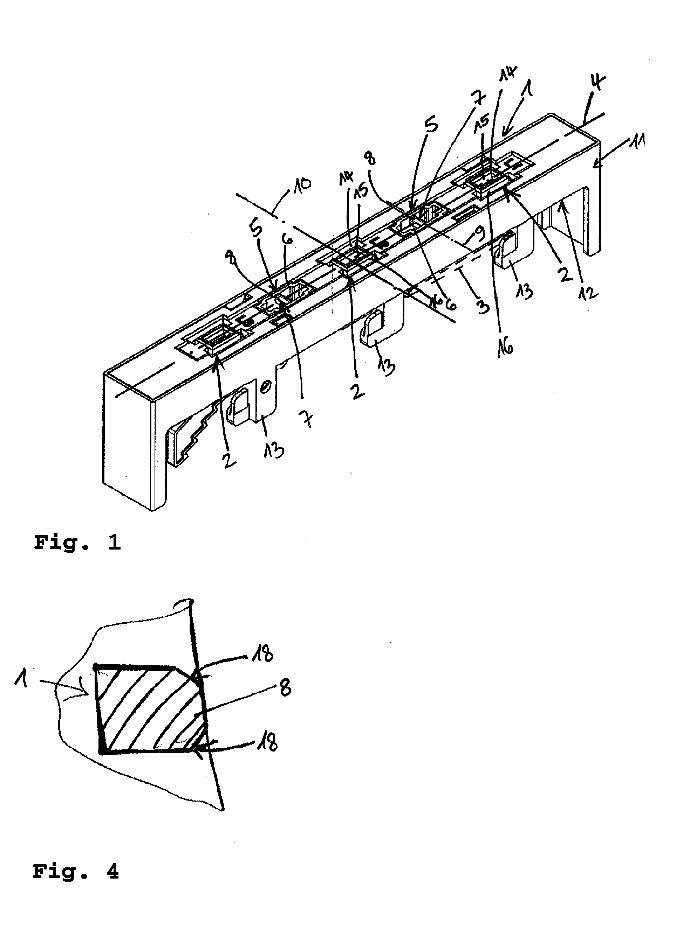

Fig. 1 zeigt eine Perspektivansicht eines Sammelschienenadapters 1 gemäß einer Ausführungsform der Erfindung. Der Sammelschienenadapter 1 weist, wie in dem in Fig. 1 gezeigten Ausführungsbeispiel gezeigt ist, beispielsweise drei Kontaktaufnahmen 2 auf, zum Aufnehmen und Kontaktieren eines oder mehrerer Installationsgeräte (nicht dargestellt). Beispiele für derartige Installationsgeräte sind Motorschutzschalter, Schützen oder andere elektrischen Geräte, die mit Stromschienen 3 des Sammelschienenadapters 1 elektrisch verbunden werden. Eine Stromschiene 3 ist in Fig. 1 stark vereinfacht mit einer gestrichelten Linie angedeutet.

Die Kontaktaufnahmen 2 sind dabei vorzugsweise in einer Reihe angeordnet und liegen in dem in Fig. 1 illustrierten Ausführungsbeispiel auf einer gemeinsamen Längsachse 4.

Zwischen zwei Kontaktaufnahmen 2 ist des Weiteren eine Befestigungseinrichtung 5 oder eine Befestigungsmatrix vorgesehen zum Befestigen eines Installationsgeräts an dem Sammelschienenadapter 1. Die jeweilige Befestigungseinrichtung 5 weist dabei eine Öffnung 6 in dem Sammelschienenadapter 1 auf. Die Öffnung 6 ist derart geformt einen Teil, z.B. ein Rastelement, eines zugeordneten Installationsgeräts aufzunehmen. In dem in Fig. 1 gezeigten Ausführungsbeispiel weist die Befestigungseinrichtung 5 eine Rasteinrichtung 7 auf, beispielsweise in Form eines Haltestegs 8. Der Haltesteg 8 verläuft beispielsweise entlang der Querachse 9 der Öffnung 6 bzw. der Befestigungseinrichtung 5. Der Haltesteg 8 ist derart ausgebildet, dass ein Rastelement des Installationsgeräts an diesem Einrasten oder Hinterrasten kann. Auf diese Weise kann das Installationsgerät in der Öffnung 6 an dem Sammelschienenadapter 1 befestigt werden.

Die beiden Befestigungseinrichtungen 5 sind zueinander symmetrisch zwischen den Kontaktaufnahmen 2 angeordnet. Durch diese symmetrische Anordnung der Befestigungseinrichtungen 5 kann ein Installationsgerät auch um 180° gedreht auf den Sammelschienenadapter 1 aufgesetzt und in den Befestigungseinrichtungen 5 befestigt werden.

Die jeweilige Befestigungseinrichtung 5 ist hierbei, wie in dem Ausführungsbeispiel in Fig. 1 gezeigt ist, ebenfalls symmetrisch aufgebaut. Die Symmetrieachsen der Befestigungseinrichtung 5 sind dabei deren Querachse 9 und Längsachse 4. Die Befestigungseinrichtungen 5 liegen dabei beispielsweise auf einer gemeinsamen Längsachse 4 mit den Kontaktaufnahmen 2. Des Weiteren sind die Befestigungseinrichtungen 5 und die Kontaktaufnahmen 2 in dem in Fig. 1 gezeigten Ausführungsbeispiel spiegelsymmetrisch zu der gemeinsamen Längsachse 4 ausgebildet. Die Längsachse 4 bildet dabei gleichzeitig die Spiegelachse der Kontaktaufnahmen 2 und der Befestigungseinrichtungen 5. Des Weiteren sind die Kontaktaufnahmen 2 und die Befestigungseinrichtungen 5 auch spiegelsymmetrisch zu einer Querachse ausgebildet. In dem in Fig. 1 gezeigten Ausführungsbeispiel sind die Kontaktaufnahmen 2 und die Befestigungseinrichtungen 5 zu der Querachse 10 der mittleren Kontaktaufnahme 2 ausgebildet.

Wie in Fig. 1 gezeigt ist, weist der Sammelschienenadapter 1 ein Gehäuse 11 auf, beispielsweise aus Kunststoff, an dessen Unterseite 12 im Bereich der Kontaktaufnahmen 2 Klemmfüße 13 vorgesehen sind. In Fig. 1 ist beispielsweise ein dreiphasiger Sammelschienenadapter 1 gezeigt, welcher drei Klemmfüße 13 aufweist. Die Klemmfüße 13 weisen dabei beispielsweise eine im Wesentlichen L-förmige Gestalt auf.

Die Kontaktaufnahmen 2 weisen, wie in dem Ausführungsbeispiel in Fig. 1 gezeigt ist, jeweils beispielsweise drei Öffnungen 14, 15, 16 auf, die zur Aufnahme eines Kontaktelements, beispielsweise eines Steckkontakts eines zugeordneten Installationsgeräts dienen. Der Steckkontakt wird wiederum mit einem Kontakt, beispielsweise einer Kontaktfeder, im Bereich der Klemmfüße 13 verbunden, um nach dem Aufschieben des Sammelschienenadapters 1 das Installationsgerät mit der jeweiligen Stromschiene 3 elektrisch zu kontaktieren.

Des Weiteren weist das Gehäuse 11 mehrere Führungseinrichtungen 17 auf zur Aufnahme und Führung eines jeweils zugeordneten Führungselements eines Installationsgeräts. Die Führungseinrichtungen 17 in dem in Fig. 1 gezeigten Ausführungsbeispiel sind dabei als Führungsschlitze 17 ausgebildet. In dem jeweiligen Führungsschlitz 17 ist ein Führungselement in Form eines entsprechenden Vorsprungs des Installationsgeräts aufnehmbar. Beim Aufsetzen eines jeweiligen Installationsgeräts wird die Position durch dessen Führungselement oder Führungselemente vorgegeben. Diese Führungselemente werden in den dazu korrespondierenden Führungseinrichtungen 17 des Sammelschienenadapters 1 aufgenommen und geführt. In dem in Fig. 1 illustrierten Ausführungsbeispiel, ragen die Führungselemente des Installationsgeräts in die zugeordneten Führungsschlitze 17 an dem Sammelschienenadapter 1, bevor Steckkontakte des Installationsgeräts in den Kontaktaufnahmen 2 des Sammelschienenadapters 1 eintauchen und eine mechanische Verriegelung stattfindet. In der geführten Position gleitet das Rastelement des Installationsgeräts über eine Schräge 18 des Haltestegs 8 der zugeordneten Befestigungseinrichtung 5, bis es schließlich den Haltesteg 8 umgreift und hinterrastet. Dabei wird das Hinterrasten oder Einrasten des Installationsgeräts an dem Sammelschienenadapter 1 durch die angeschrägten Haltestege 8 unterstützt.

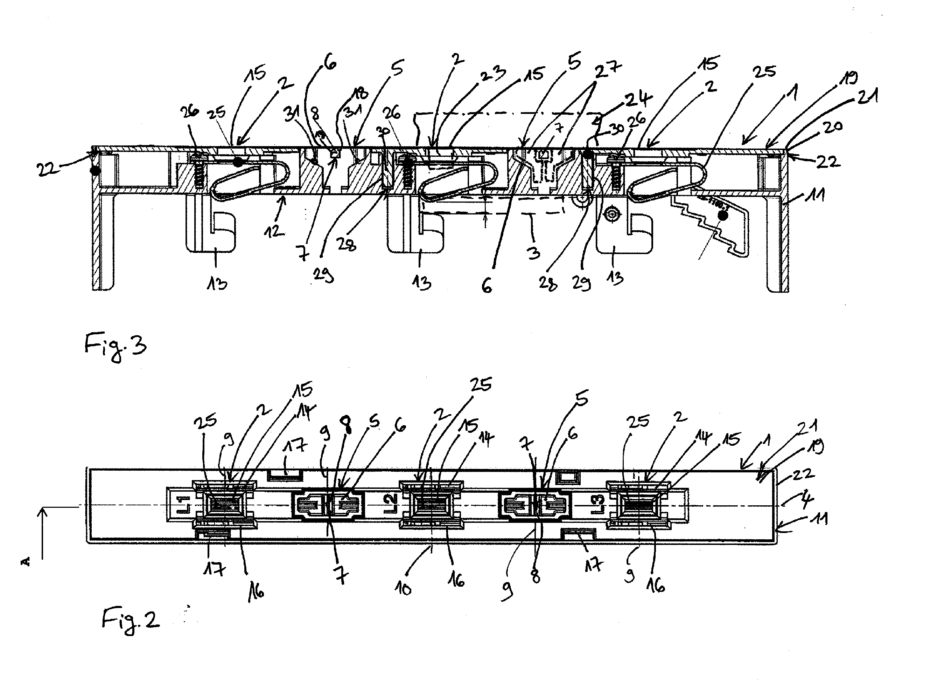

In Fig. 2 ist eine Draufsicht auf den Sammelschienenadapter 1 gemäß Fig. 1 gezeigt. Die Kontaktaufnahmen 2 und die Befestigungseinrichtungen 5 sind dabei, wie zuvor beschrieben, auf einer gemeinsamen Längsachse 4 angeordnet und zu dieser spiegelsymmetrisch. Des Weiteren sind die Kontaktaufnahmen 2 und die Befestigungseinrichtungen 5 auch symmetrisch zu der Querachse 10 der mittleren Kontaktaufnahme 2.

Die Führungsschlitze 17 sind beispielsweise in einem Deckelelement 19 des Gehäuses 11 ausgebildet und schließen mit einer Umfangswand 20 des Gehäuses 11 ab. Die Form der Führungsschlitze 17 ist derart ausgebildet ein zugeordnetes Führungselement, z.B. einen Vorsprung, des Installationsgeräts aufzunehmen und in eine vorbestimmte Position in dem Sammelschienenadapter 1 zur Führen und zu positionieren.

Des Weiteren ist in Fig. 3 eine Querschnittansicht A-A des Sammelschienenadapters 1 gemäß Fig. 2 dargestellt.

Wie aus Fig. 3 entnommen werden kann, weist das Gehäuse 11 des Sammelschienenadapters 1 an seiner Oberseite 21 eine erste Deckelaufnahme 22, beispielswiese in Form einer umlaufenden Vertiefung auf, zum Aufnehmen des Deckelelements 19. In dem Deckelement 11 sind dabei die Führungsschlitze 17 ausgebildet, welche mit der Umfangswand 22 des Gehäuses 11 auf ihrer Außenseite abschließen.

Des Weiteren weist das Deckelelement 19 die jeweiligen Öffnungen 14, 15, 16 der Kontaktaufnahme 2 auf, zur Einführung eines Steckkontakts 23 eines zugeordneten Installationsgeräts 24 in die Kontaktaufnahme 2. Das Installationsgerät 24 und sein Steckkontakt 23 sind in Fig. 3 stark vereinfacht und rein schematisch mit einer strichpunktierten Linie angedeutet.

Der Steckkontakt 23 kontaktiert unterhalb der Öffnungen 14, 15, 16 der Kontaktaufnahme 5 angeordneten Kontakt, z.B. eine Kontaktfeder 25, des Sammelschienenadapters 1. Auf diese Weise kann ein Installationsgerät 24 mit dem Kontakt 25 des Sammelschienenadapters 1 mit einer in den Sammelschienenadapter 1 eingeführten Stromschiene 3 elektrisch verbunden werden. Auf der Unterseite 12 des Gehäuses 11, sind wie zuvor beschrieben, Klemmfüße 13 angeordnet. Zwischen dem jeweiligen Klemmfuß 13 und dem zugeordneten Kontakt 5 des Sammelschienenadapters 1 wird eine Stromschiene 3 eingeführt. Die Stromschiene 3 ist in Fig. 3 stark vereinfacht und rein schematisch mit einer gestrichelten Linie angedeutet.

Die Kontaktfeder 25 als Kontakt ist mit einem Ende beispielsweise lösbar an dem Gehäuse 11 befestigt, z.B. mittels einer Schraube 26 angeschraubt wie in dem Ausführungsbeispiel in Fig. 3 gezeigt ist. Die Kontaktfeder 25 wird von oben durch das Deckelelement 19 abgedeckt und liegt im Bereich der Öffnungen 14, 15, 16 der Kontaktaufnahme 2 im Deckelelement 19 frei, um den Steckkontakt 23 eines Installationsgeräts 24 durch die Öffnungen 14, 15, 16 der Kontaktaufnahme 2 einzuführen und mit der Kontaktfeder 25 darunter zu kontaktieren.

Des Weiteren weist das Gehäuse 11 die Befestigungseinrichtungen 5 auf zum Aufnehmen von einem oder mehreren Installationsgeräten 24. Die Befestigungseinrichtungen 5 sind dabei mit jeweils einer Öffnung 6 in dem Gehäuse 11 ausgebildet. Der Querschnitt der jeweiligen Öffnung 6 verjüngt sich beispielsweise in Längsrichtung der Öffnung 6. Wie in dem Ausführungsbeispiel in Fig. 3 gezeigt ist, weist die Öffnung 6 beispielsweise einen konisch sich verjüngenden Abschnitt auf mit einer nach unten verlaufenden Schräge 31.

Des Weiteren ist in der Öffnung 6 der Befestigungseinrichtung 5 eine zusätzliche Rasteinrichtung 7 vorgesehen. Die Rasteinrichtung 7 weist dabei beispielsweise einen Haltesteg 8 auf, welcher quer in der Öffnung 6 verläuft, vorzugsweise quer durch die Mitte der Öffnung oder entlang des Durchmessers der Öffnung. Der Haltesteg 8 kann dabei an seiner Oberseite optional zusätzlich an einer oder beiden Seiten nach unten mit einer Schräge 18 oder abgeschrägt ausgebildet sein, wie auch in dem Ausschnitt des Haltestegs 8 in nachfolgender Fig. 4 gezeigt ist.

Durch die symmetrische Ausbildung der jeweiligen Befestigungseinrichtung 5 kann das Rastelement 27 eines Installationsgeräts 24 von beiden Seiten an dem Haltesteg 8 aufgenommen werden und dort einrasten oder hinterrasten. Das Ein- bzw. Hinterrasten wird dabei durch den abgeschrägten Haltesteg 8 zusätzlich unterstützt. Grundsätzlich ist es auch denkbar, die Befestigungseinrichtung 5 mit ihrer Öffnung 6 und dem Haltesteg 8 auch in dem Deckelelement 19 auszubilden und in das Gehäuse 11 einzusetzen (nicht dargestellt).

Zur zusätzlichen Sicherung und Fixierung des Deckelelements 19 in dem Gehäuse 11 weist das Gehäuse 11 wahlweise zusätzlich eine zweite Deckelaufnahme 28 auf, in welcher das Deckelelement 19 aufnehmbar und positionierbar ist. Die zweite Deckelaufnahme 28 ist dabei beispielsweise im Bereich der Klemmfüße 13 angeordnet, die sie von der Unterseite 12 des Gehäuses 11 aus erstrecken. Die zweite Deckelaufnahme 28 weist ein oder mehrere Vertiefungen 29 auf, in welche ein dazu korrespondierender Vorsprung 30 des Deckelelements 19 einführbar oder aufnehmbar ist. Das Deckelement 19 liegt dabei beispielsweise mit seiner Unterseite auf der Oberseite der Vertiefung auf, um zusätzlich an dem Gehäuse 11 abgestützt zu werden.

In Fig. 4 ist ein Ausschnitt eines Haltestegs 8 des Sammelschienenadapters 1 gemäß Fig. 3 in einer Schnittansicht gezeigt. Der Haltesteg 8 ist dabei an seiner Oberseite auf beiden Seiten mit nach unten gerichteten Schrägen 18 versehen oder abgeschrägt. Auf diese Weise kann ein Rastelement eines Installationsgeräts an dem Haltesteg 8 von beiden Seiten einrasten oder hinterrasten. Die abgeschrägten Seiten erleichtern dabei zusätzlich das Einführen und Einrasten des Rastelements.

### Bezugszeichenliste

- 1: Sammelschienenadapter
- 2: Kontaktaufnahme
- 3: Stromschiene
- 4: Längsachse
- 5: Befestigungseinrichtung
- 6: Öffnung (Befestigungseinrichtung)
- 7: Rasteinrichtung
- 8: Haltesteg
- 9: Querachse (Befestigungseinrichtung)
- 10: Querachse (mittlere Kontaktaufnahme)
- 11: Gehäuse
- 12: Unterseite
- 13: Klemmfuss
- 14: Öffnung (Kontaktaufnahme)
- 15: Öffnung (Kontaktaufnahme)
- 16: Öffnung (Kontaktaufnahme)
- 17: Führungseinrichtung
- 18: Schräge (Haltesteg)
- 19: Deckelelement
- 20: Umfangswand
- 21: Oberseite
- 22: Erste Deckelaufnahme
- 23: Steckkontakt
- 24: Installationsgerät
- 25: Kontaktfeder
- 26: Schraube
- 27: Rastelement
- 28: Zweite Deckelaufnahme
- 29: Vertiefung
- 30: Vorsprung
- 31: Schräge (Öffnung der Befestigungseinrichtung)

## Patentansprüche

1. Sammelschienenadapter (1) mit einem Gehäuse (11) zur Aufnahme wenigstens eines Installationsgeräts (23, 24, 27) zum Kontaktieren des Installationsgeräts (23, 24, 27) mit wenigstens einer in dem Sammelschienenadapter (1) aufnehmbaren Stromschiene (3),
wobei der Sammelschienenadapter (1) wenigstens eine symmetrisch ausgebildete Kontaktaufnahme (2) zum Aufnehmen eines Kontakts (23) und zum Kontaktieren des Kontakts (23) des Installationsgeräts (24) mit einer zugeordneten Stromschiene (3) hat, **dadurch gekennzeichnet dass** die wenigstens eine Kontaktaufnahme (2) spiegelsymmetrisch zu ihrer Querachse (9, 10) und ihrer Längsachse (4) ausgebildet ist, und
wenigstens eine symmetrisch ausgebildete Befestigungseinrichtung (5) zum Befestigen des Installationsgeräts (24) an dem Sammelschienenadapter (1) aufweist, wobei die wenigstens eine Befestigungseinrichtung (5) spiegelsymmetrisch zu ihrer Querachse (9) und ihrer Längsachse (4) ausgebildet ist, wobei die Befestigungseinrichtung (5) eine Öffnung (6) in dem Sammelschienenadapter (1) aufweist zum Aufnehmen eines Rastelements (27) des Installationsgeräts (24), wobei wenigstens Abschnitt einer Seitenwand der Öffnung (6) eine nach unten gerichtete Schräge (31) aufweist und wobei die Befestigungseinrichtung (5) wenigstens eine Rasteinrichtung (7) zum Befestigen des Installationsgeräts (24) aufweist.

2. Sammelschienenadapter nach Anspruch 1,
**dadurch gekennzeichnet,**
**dass** die wenigstens eine Kontaktaufnahme (2) und die wenigstens eine Befestigungseinrichtung (5) auf einer gemeinsamen Längsachse (4) angeordnet sind.

3. Sammelschienenadapter nach einem der vorangehenden Ansprüche,
**dadurch gekennzeichnet,**
**dass** die Rasteinrichtung (7) ein Haltesteg (8) ist.

4. Sammelschienenadapter nach Anspruch 3,
**dadurch gekennzeichnet,**
**dass** der Haltestege (8) quer durch die Öffnung (6) der Befestigungseinrichtung (5) verläuft.

5. Sammelschienenadapter nach Anspruch 4,
**dadurch gekennzeichnet**,
dassder Haltesteg (8) an wenigstens einer Seite mit einer nach unten gerichteten Schräge (18) ausgebildet ist.

6. Sammelschienenadapter nach Anspruch 3, 4 oder 5,
**dadurch gekennzeichnet,**
**dass** die Installationseinrichtung (24) von wenigstens einer Seite an dem Haltesteg (8) einrastbar ist.

7. Sammelschienenadapter nach wenigstens einem der vorangehenden Ansprüche,
**dadurch gekennzeichnet,**
**dass** die Kontaktaufnahme (2) wenigstens eine Aufnahme (14, 15, 16) zum Aufnehmen eines Steckkontakts (23) des Installationsgeräts (24) aufweist.

8. Sammelschienenadapter nach Anspruch 7,
**dadurch gekennzeichnet,**
**dass** der Kontakt des Sammelschienenadapters (1) zum Kontaktieren des Steckkontakts (23) eine Kontaktfeder (25) ist.

9. Sammelschienenadapter nach wenigstens einem der vorangehenden Ansprüche,
**dadurch gekennzeichnet,**
**dass** der Sammelschienenadapter (1) wenigstens eine Führungseinrichtung (17) aufweist zum Vorpositionieren des Installationsgeräts (24) an dem Sammelschienenadapter (1).

10. Sammelschienenadapter Anspruch 9,
**dadurch gekennzeichnet,**
**dass** die Führungseinrichtung als Führungsschlitz (17) in dem Sammelschienenadapter (1) ausgebildet ist.

11. Sammelschienenadapter nach Anspruch 9 oder 10,
**dadurch gekennzeichnet,**
**dass** die Führungseinrichtung (17) derart ausgebildet ist, einen Teil des Installationsgeräts (24) aufzunehmen und zu führen bevor der Steckkontakt (23) des Installationsgeräts (24) in der Kontaktaufnahme (2) teilweise oder ganz aufgenommen ist.

12. Sammelschienenadapter nach einem der vorgehenden Ansprüche,
**dadurch gekennzeichnet,**
**dass** das Gehäuse (11) auf seiner Oberseite (21) mit einem Deckelelement (19) verschließbar ausgebildet ist.

13. Sammelschienenadapter nach Anspruch 12,
**dadurch gekennzeichnet,**
**dass** das Deckelelement (19) in einer ersten Deckelelementaufnahme (22) des Gehäuses (11) aufnembar ist, wobei die erste Deckelelementaufnahme (22) als Vertiefung in der Umfangswand (20) des Gehäuses (11) ausgebildet ist.

14. Sammelschienenadapter nach einem der vorgehenden Ansprüche,
**dadurch gekennzeichnet,**
**dass** das Gehäuse (11) eine zweite Deckelelementaufnahme (28) aufweist.

15. Sammelschienenadapter nach einem der vorgehenden Ansprüche,
**dadurch gekennzeichnet,**
**dass** die Deckelelementaufnahme (28) in Form von wenigstens einer Vertiefung (29)in dem Gehäuse (11) ausgebildet ist, in welcher ein Vorsprung (30) des Deckelelements (19) aufnehmbar ist.

## Claims

1. Busbar adapter (1) comprising a housing (11) for receiving at least one installation device (23, 24, 27) to contact the installation device (23, 24, 27) with at least one busbar (3) which can be received in the busbar adapter (1),
the busbar adapter (1) having at least one symmetrically formed contact recess (2) for receiving a contact (23) and for contacting the contact (23) of the installation device (24) with an associated busbar (3),
**characterised in that** the at least one contact recess (2) is formed mirror-symmetrical about the transverse axis (9, 10) thereof and the longitudinal axis (4) thereof, and
comprises at least one symmetrically formed fastening device (5) for fastening the installation device (24) to the busbar adapter (1), the at least one fastening device (5) being formed mirror-symmetrical about the transverse axis (9) and the longitudinal axis (4) thereof, the fastening device (5) comprising an opening (6) in the busbar adapter (1) for receiving a latch element (27) of the installation device (24), at least a portion of a side wall of the opening (6) having a downwardly directed bevel (31) and the fastening device (5) having at least one latch device (7) for fastening the installation device (24).

2. Busbar adapter according to claim 1,
**characterised in that**
the at least one contact recess (2) and the at least one fastening device (5) are arranged on a shared longitudinal axis (4).

3. Busbar adapter according to any of the preceding claims,
**characterised in that**
the latch device (7) is a holding web (8).

4. Busbar adapter according to claim 3,
**characterised in that**
the holding web (8) extends transversely through the opening (6) of the fastening device (5).

5. Busbar adapter according to claim 4,
**characterised in that**
the holding web (8) is formed with a downwardly directed bevel (18) on at least one face.

6. Busbar adapter according to claim 3, 4 or 5,
**characterised in that**
the installation device (24) can be latched onto the holding web (8) from at least one side.

7. Busbar adapter according to at least one of the preceding claims,
**characterised in that**
the contact recess (2) has at least one recess (14, 15, 16) for receiving a plug-in contact (23) of the installation device (24).

8. Busbar adapter according to claim 7,
**characterised in that**
the contact of the busbar adapter (1) for contacting the plug-in contact (23) is a contact spring (25).

9. Busbar adapter according to at least one of the preceding claims,
**characterised in that**
the busbar adapter (1) has at least one guide device (17) for prepositioning the installation device (24) on the busbar adapter (1).

10. Busbar adapter according to claim 9,
**characterised in that**
the guide device is formed in the busbar adapter (1) as a guide slit (17).

11. Busbar adapter according to either claim 9 or claim 10,
**characterised in that**
the guide device (17) is formed so as to receive and guide part of the installation device (24) before the plug-in contact (23) of the installation device (24) is received in part or in whole in the contact recess (2).

12. Busbar adapter according to any of the preceding claims,
**characterised in that**
the housing (11) is formed to be sealable on the upper face (21) thereof using a cover element (19).

13. Busbar adapter according to claim 12,
**characterised in that**
the cover element (19) can be received in a first cover element recess (22) of the housing (11), the first cover element recess (22) being formed as a depression in the peripheral wall (20) of the housing (11).

14. Busbar adapter according to any of the preceding claims,
**characterised in that**
the housing (11) comprises a second cover element recess (28).

15. Busbar adapter according to any of the preceding claims,
**characterised in that**
the cover element recess (28) is in the form of at least one depression (29) in the housing (11), in which a projection (3) of the cover element (19) can be received.

## Revendications

1. Adaptateur de barre omnibus (1) avec un boîtier (11) pour la réception d'au moins un appareil d'installation (23, 24, 27) pour la mise en contact de l'appareil d'installation (23, 24, 27) avec au moins un rail conducteur (3) pouvant être reçu dans l'adaptateur de barre omnibus (1),
l'adaptateur de barre omnibus (1) ayant au moins une réception de contact (2) réalisée de manière symétrique pour recevoir un contact (23) et pour la mise en contact du contact (23) de l'appareil d'installation (24) avec un rail conducteur (3) associé,
**caractérisé par le fait que** l'au moins une réception de contact (2) est réalisée à symétrie de miroir par rapport à leur axe transversal (9, 10) et à leur axe longitudinal (4), et
présente au moins un dispositif de fixation (5) réalisé de manière symétrique pour fixer l'appareil d'installation (24) au niveau de l'adaptateur de barre omnibus (1), l'au moins un dispositif de fixation (5) étant réalisé à symétrie de miroir par rapport à son axe transversal (9) et à son axe longitudinal (4), le dispositif de fixation (5) présentant une ouverture (6) dans l'adaptateur de barre omnibus (1) pour recevoir un élément d'encliquetage (27) de l'appareil d'installation (24), au moins une section d'une paroi latérale de l'ouverture (6) présentant un chanfrein (31) orienté vers le bas et le dispositif de fixation (5) présentant au moins un élément d'encliquetage (7) pour fixer l'appareil d'installation (24).

2. Adaptateur de barre omnibus selon la revendication 1,
**caractérisé par le fait que**
l'au moins une réception de contact (2) et l'au moins un dispositif de fixation (5) sont disposés sur un axe longitudinal (4) commun.

3. Adaptateur de barre omnibus selon l'une des revendications précédentes,
**caractérisé par le fait que**
le dispositif d'encliquetage (7) est une barre de retenue (8).

4. Adaptateur de barre omnibus selon la revendication 3,
**caractérisé par le fait que**
la barre de retenue (8) s'étend transversalement à travers l'ouverture (6) du dispositif de fixation (5).

5. Adaptateur de barre omnibus selon la revendication 4,
**caractérisé par le fait que**
la barre de retenue (8) est réalisée au niveau d'au moins un côté avec un chanfrein (18) orienté vers le bas.

6. Adaptateur de barre omnibus selon la revendication 3, 4 ou 5,
**caractérisé par le fait que**
le dispositif d'installation (24) peut être encliqueté par au moins un côté au niveau de la barre de retenue (8).

7. Adaptateur de barre omnibus selon au moins l'une des revendications précédentes,
**caractérisé par le fait que**
la réception de contact (2) présente au moins une réception (14, 15, 16) pour recevoir un contact enfichable (23) de l'appareil d'installation (24).

8. Adaptateur de barre omnibus selon la revendication 7,
**caractérisé par le fait que**
le contact de l'adaptateur de barre omnibus (1) pour mettre en contact le contact enfichable (23) est un ressort de contact (25).

9. Adaptateur de barre omnibus selon au moins l'une des revendications précédentes,
**caractérisé par le fait que**
l'adaptateur de barre omnibus (1) présente au moins un dispositif de guidage (17) pour prépositionner l'appareil d'installation (24) au niveau de l'adaptateur de barre omnibus (1).

10. Adaptateur de barre omnibus selon la revendication 9,
**caractérisé par le fait que**
le dispositif de guidage est réalisé sous forme de fente de guidage (17) dans l'adaptateur de barre omnibus (1).

11. Adaptateur de barre omnibus selon la revendication 9 ou 10,
**caractérisé par le fait que**
le dispositif de guidage (17) est réalisé de manière à recevoir et à guider une partie de l'appareil d'installation (24), avant que le contact enfichable (23) de l'appareil d'installation (24) soit reçu partiellement ou entièrement dans la réception de contact (2).

12. Adaptateur de barre omnibus selon l'une des revendications précédentes,
**caractérisé par le fait que**
le boîtier (11) est réalisé refermable sur sa face supérieure (21) avec un élément de couvercle (19).

13. Adaptateur de barre omnibus selon la revendication 12,
**caractérisé par le fait que**
l'élément de couvercle (19) peut être reçu dans une première réception d'élément de couvercle (22) du boîtier (11), la première réception d'élément de couvercle (22) étant réalisée sous forme de renfoncement dans la paroi périphérique (20) du boîtier (11).

14. Adaptateur de barre omnibus selon l'une des revendications précédentes,
**caractérisé par le fait que**
le boîtier (11) présente une seconde réception d'élément de couvercle (28).

15. Adaptateur de barre omnibus selon l'une des revendications précédentes,
**caractérisé par le fait que**
la réception de l'élément de couvercle (28) est réalisée sous la forme d'au moins un renfoncement (29) dans le boîtier (11), dans lequel une saillie (30) de l'élément de couvercle (19) peut être reçue.
